Europäisches Patentamt

European Patent Office

Office européen des brevets

(11) Publication number: **0 287 288**
**A1**

## (12) EUROPEAN PATENT APPLICATION

(21) Application number: 88303155.1

(22) Date of filing: 08.04.88

(51) Int. Cl.⁴: **C08K 9/10 , C08L 67/06 ,**
**C08J 3/24**

(30) Priority: 14.04.87 GB 8708982

(43) Date of publication of application:
19.10.88 Bulletin 88/42

(84) Designated Contracting States:
BE DE ES FR GB IT NL SE

(71) Applicant: Interox Chemicals Limited
3 Bedford Square
London WC1B 3RA(GB)

(72) Inventor: Sanderson, William Ronald
23 Rossall Road Great Sankey
Warrington, Cheshire, WA5 2SP(GB)
Inventor: Harrison, Paul Richard
26 Vauxhall Close
Penketh Warrington, Cheshire, WA5 2JX(GB)
Inventor: Derbyshire, Stewart
37 Tudor Way Deva Park
Chester Cheshire, CH3 5XQ(GB)

(74) Representative: Pearce, Timothy et al
Laporte Industries Limited Group Patent
Department P.O. Box 2 Moorfield Road
Widnes Cheshire WA8 OJU(GB)

(54) **Curing polyester resins.**

(57) Unsaturated polyester resins in the form of dough or sheet moulding compositions can be cured by the application of heat and pressure using an organic peroxide initiator. To reduce residence time of the resin in the mould, the resin can be pre-heated, but if the pre-heat temperature approaches the curing temperature too closely, premature curing occurs and this problem would occur at much lower temperatures if an accelerator were to be incorporated, which is why, in practice they have not been used.

The invention provides accelerators such as transition metal compounds, including cobalt naphthenate or octoate, or tertiary amines in microencapsulated form, the capsules releasing the accelerator under the heat and pressure conditions pertaining in the curing step. Suitable wall materials include urea/formaldehyde condensates applied from aqueous acidic solution or polyamide or styrene/DVB or methyl methacrylate polymerised at the interface with an aqueous phase containing a catalyst or natural polymers such as gelatin/gum arabic, applied by a coacervation technique.

The invention also provides processes for curing such resins together with an organic peroxide that preferably is also microencapsulated.

As an additional benefit, the invention improves the storage stability of resin compositions containing accelerator and organic peroxide.

## Curing Polyester Resins

The present invention relates to the curing of polyester resins and more particularly to curing such resins with an accelerated organic peroxide system.

Unsaturated polyester resins for subsequent curing are well known and are obtained by polycondensation of unsaturated dicarboxylic acids such as maleic or fumaric acid with dihydric alcohols such as ethylene glycol or bisphenol A, which is dissolved or suspended in a monomer such as styrene. These resins are usually cured using free-radicals provided by the decomposition of organic peroxides and the rate of cure can also be further increased by the provision of transition metal salts or certain classes of amines, especially when curing is sought at comparatively low temperatures.

Various techniques can be employed to cure polyester resins, including the application of heat or pressure and in perticular the use of both in combination. Pressure moulding at elevated temperature employs expensive equipment and it is accordingly of practical importance to the user that he is able to maximise his through-put, which can be achieved by minimising the residence time of the resin in the mould. Whilst some increase in through-put can be gained by preheating the resin before it is introduced into the mould, the procedure has limited application because the use of preheat temperatures that closely approach the cure temperature lead to decomposition of the organic peroxide and results in some cross-linking. It is a practical requirement that excessive premature curing of the resin be avoided, for example because it can substantially increase the viscosity of the resin mixture, impairing or hindering its introduction into the mould and at worst make the resin unusable. The problem would be especially troublesome if an accelerator were present as well as the organic peroxide. Indeed, the presence of accelerators substantially shortens the storage time for resins, even at moderate temperatures. Thus, if it were considered feasible and practical to preheat an organic peroxide-containing resin to say 40 to 50°C if did not contain an accelerator, the additional presence of unprotected accelerator at that temperature range would promote excessive premature curing during preheating, so that a preheating step is impractical when initiator and accelerator can freely commingle. The only option remaining would be for the resin mixture to heated to the full extent needed for curing in the pressure mould, but that approach maximises the residence time of the resin in the mould and is therefore the complete reverse of what is desired. Consequently, it has not been common practice to incorporate accelerators in polyester resins intended for pressure curing at elevated temperatures.

On the other hand, the benefits of incorporating an accelerator namely increasing the rate of cure of the resin at the selected curing temperature remain inherently attractive, provided that the problem of premature curing could be overcome or at least ameliorated sufficiently.

It is an object of the present invention to provide a means for ameliorating the problem of premature curing of unsaturated polyester resins induced by a system comprising an organic peroxide and an accelerator.

According to one aspect of the present invention the accelerator is provided in the form of microcapsules which have a wall or polmeric matrix that surrounds or incorporates the accelerator, which wall or matrix is substantially insoluble in the unsaturated polyester resin at ambient temperatures when mixed with the resin and which is capable of releasing the accelerator when the resin mixture is subjected to elevated temperature or pressure. In a closely related aspect, the invention provides unsaturated polyester resins containing an effective amount of such a microencapsulated accelerator.

By encapsulating the accelerator, it is thereby separated from the other components of the polyester resin composition during storage and preheating of the resin, consequently preventing interaction with, in particular, any organic peroxide initiator that is also incorporated within the resin. Thus, the accelerator remains available to perform the desired acceleration of curing under the conditions of pressure curing, but does not accelerate curing prematurely.

By virtue of being able to incorporate an accelerator as well as an organic peroxide, it will be recognised that it is consequently possible to employ a less active, ie more storage stable, organic peroxide than would be the case in the absence of the accelerator. The rate of decomposition of organic peroxides is temperature dependent, so that the temperature to which the peroxide can be heated before its half-life becomes intolerably short is of practical importance. As a result of being able to choose, if desired, a more storage stable peroxide than would otherwise be the case, it is consequently possible to raise the preheat temperature of the resin mixture higher than if a more active peroxide is used, and thus bring it closer to the temperature employed in the pressure moulding curing step. The significance of that is that the resin needs to be heated to a lesser extent in the mould, thereby enabling a shorter retention time in the mould and thus increasing potentially the throughput of the apparatus.

The term accelerator is used herein in its conventional manner in the art of polyester resin curing, that is to say refers in particular to salts of transition metals, including copper, iron, manganese and vanadium and especially to salts of cobalt, the salts commonly being salts of aliphatic or aromatic carboxylic acids such as octoate and naphthenate, and additionally to certains classes of amines, mainly tertiary aromatic amines including specifically diethylaniline, dimethlyaniline and dimethyl p-toluidine. It will be understood that of the accelerators cobalt naphthenate is highly favoured. The invention is not restricted to use of only a single accelerator, and indeed contemplates the use of a combination of accelerators' and in particular a combination of separately encapsulated accelerator types.

While any applicable technique may be utilised to produce the microcapsules of the present invention it is preferred that the technique and wall-forming reactants or constituents be selected so that the wall material is compatible with the polyester resin. Preferably the microencapsulation technique utilised according to the present invention is selected from the techniques of interfacial polycondensation, emulsion hardening and coacervation, which are all suited to the encapsulation of normally liquid materials which the accelerators either are, or may be formulated so to be.

For the avoidance of doubt, it will be understood that in the process of forming a polymeric wall for the microcapsules around the accelerator core material, the core material itself and/or its solvent can interact or intermix to some extent with material being employed to form the wall. Thus, whilst in some cases when the interaction is small, a discrete inner surface of the wall material is readily observable, showing clearly that the particle has a wall/core structure, the wall/core boundary becomes increasingly blurred as the extent of interaction increases. At the other extreme, the boundary is not detectable, so that the polymeric wall-forming material is more correctly described as a matrix within which the core material is distributed, the density of distribution being greater at the core than near the outer surface of the particles. It is to be understood that the term microcapsule as used herein includes particles ranging from those containing a defined inner boundary between the core and the wall to those in which the core is dispersed within a polymeric matrix, and that reference to formation of walls includes correspondingly a reference to formation of such a matrix. Similarly, when the term encapsulating is used herein, it includes the formation of matrix/core material particles. Likewise, other or related terms refering to the use of microcapsules include a similar reference to use of matrix/core material structured particles.

It is particularly suitable to pre-formulate the accelerator as a liquid by dissolving it in an inert hydrocarbon material and especially in one that has a high boiling point, preferably higher than the curing temperature for the eventual use of the accelerator. For most uses any hydrocarbon boiling at about 120°C or above is suitable, including xylene, mesitylene, higher molecular weight saturated paraffins and mixtures such as aliphatic and/or aromatic fractions obtained by distilling crude petroleum, in many instances up to 300°C boiling point. Other water-immiscible organic solvents, preferably again meeting the preferred boiling point ranges can be employed in addition or instead to formulate the accelerator as an oily liquid. The extent to which the accelerator is dissolved in the oil phase is a matter for the discretion of the formulator. A solution at or near saturation minimises the volume of accelerator phase to be microencapsulated, whereas variation of the concentration of accelerator in the range below saturation level can provide a measure of control of the extent of acceleration.

The first technique which may be used to form microcapsules suitable for use in the instant invention is polycondensation. In this technique, a polymeric pre-condensate is added to a system comprising a) an oil phase comprising or containing the accelerator which is then dispersed in the form of droplets in b) an aqueous phase. The aqueous phase contains an agent which brings about further polymerisation, insolubilisation, and/or cross-linking in the pre-condensate, and capsules having tough, impermeable walls result. A particularly important example of this technique involves a urea/formaldehyde precondensate hardened under acidic conditions, as described in British Patent No. 1042596 and in United States Patent No. 3516846, both to 3M Company, and on page 50 of a book by A. Kondo et al, entitled Microcapsule Processing and Technology as edited and revised by J Wade Van Valkenburg and published in 1979 by Marcel Dekker. The capsule formation stage is typically carried out under mildly elevated temperatures, such as around 50°C, with energetic stirring to maintain the oil phase as an emulsion for a period often in excess of half an hour.

In a somewhat related technique of emulsion hardening, which is also an attractive and suitable technique, an oil phase is formed which contains an ethylenically-unsaturated monomer in addition to the accelerator. The monomer can comprise a mixture of styrene loaded with a controlled proportion of divinyl benzene for cross linking the wall and thereby ensuring that it remains sufficiently insoluble in the styrene/DVB component of the polyester resin to prevent release of the accelerator during storage, and other monomers can include methyl methacrylate.

The oil phase is then emulsified by vigorous stirring into an aqueous phase containing a water-soluble polymerisation catalyst in an effective amount, which is often selected from water-soluble peroxides and in particular soluble persulphates including ammonium, sodium and potassium perdisulphates. The wall forms at the interface between the phases. In view of interaction during polymerisation of the wall between the a transition metal such as cobalt and the aqueous phase, it is a practical precaution to employ sufficient catalyst at the start of the process to allow for processsing losses.

In the microencapsulation technique of coacervation a dissolved polymer is thrown out of solution in the presence of a dispersed insoluble material, the core material, which is preferentially wetted by the polymer. The means of throwing the polymer out of solution to form the capsule wall which is utilised may be a pH change, a temperature change, an electrolyte concentration change, or the addition of a non-solvent for the polymer or by other means. The technique of coacervation may be applied to the formation of capsule walls including cellulose or carbohydrate derivatives which would be inherently compatible with polyester materials.

A "complex" coacervation system may be used based on gelatin and gum arabic (acacia) polymers. This procedure is further described in "Microcapsule Processing and Technology" by A. Kondo and J.W. Van Valkenburg (Marcel Dekker Inc, 1979) pp. 75 and 76 and in the review article "Microcapsules: Their Preparation and Properties" by T. Kondo in the series "Surface and Colloid Science" 1978, volume 10, chapter 1, page 6, and in "Microencapsulation and Related Drug Processes" by P.B. Deasy (Marcel Dekker Inc, 1984) pp. 68 and 69.

The polysaccharide gum arabic may be substituted either by natural materials of a similar nature such as guar or guaya gum or by chemically modified celluloses such as carboxymethyl cellulose.

Alternatively coacervation procedures based on methyl cellulose or cellulose acetate phthalate, as referred to in the above mentioned book by A. Kondo et al, p 90 may be used.

The microencapsulation techniques described above are considered by the instant inventors to be particularly suited to the application of the instant invention, both because of their refinement in the hands of skilled practitioners to versatile and reliable methods for enclosing water-immiscible liquid core materials similar to those required by the instant invention, and also more particularly because of their ability to produce capsules in the size range prescribed by the present invention.

Techniques of microencapsulation other than those described above are not excluded, however, and may be used insofar as they are able to produce capsules which conform to the requirements of the instant invention. For example, other techniques include interfacial polymerisation where care should be taken to minimise leaching out of the accelerator from the dispersed oil phase into the aqueous phase arising from the fact that certain of the typical reagents, including acid chlorides and amines either are or generate good ligands for transition metals.

Preferably, the microcapsules have a diameter from 0.2 to 50 microns, and particularly preferably from 1 to 10 microns.

It is especially convenient to employ dried microcapsules in the resin, ie. it is better to separate and dry the capsules before their subsequent use.

It will be understood that the benefits of the instant invention derive from the physical separation of the initiator and the accelerator by a substantially impermeable barrier so formed and characterised that the acceleration of radical formation is withheld until the desired curing temperature/pressure conditions are created.

In an overlapping aspect of the present invention, the polyester resin contains a curing catalyst system of an organic peroxide initiator and an accelerator in which at least one of the components, and preferably both of the components of the catalyst system is present in the form of microcapsules, so that thereby there is a physical impermiable barrier separating the two components during storage or pre-heating of the resin and the two interact in consequence mainly during pressure curing of the resin. The interaction results in a very rapid release of free radicals throughout the resin, encouraging rapid and even curing.

The organic peroxide that can be employed can be selected from a very wide range, including peresters, perketals, hydroperoxides, peroxydicarbonates, diacyl peroxides and ketone peroxides. Examples of such peroxides include t-butyl peroctanoate, perbenzoate, methyl ethyl ketone peroxide, cyclohexanone peroxide, or acetyl acetone peroxide, particularly in conjunction with the transition metal accelerator, dibenzoyl peroxide and bis(4-t-butylcyclohexyl) peroxydicarbonate. If desired, a mixture of organic peroxides can be used.

The organic peroxides can be employed in the form of microcapsules, the term similarly including matrix/core material particles as for the microcapsules of accelerator. Such microcapsules can be made by the same general methods employed for the accelerators where they are liquid or dissolved in an oil phase. Liquid organic peroxides can be encapsulated by an orifice process or by an in-liquid curing coating process, in which a linear polymer is solubilised in a solution, and on curing insolubilises and forms a film around the core. Curing is achieved by addition of inorganic ions, aldehydes, nitric acid or isocyanates, or by thermal coagulation, depending upon the inherent decomposition rate of the organic peroxide core, neutralisation to an isoelectric point or by bonding of two polymers of opposite charge, techniques that are well known in their own right. The techniques of coacervation, polycondensation of urea or formaldehyde resin walls or interfacial polymerisation can also be employed where the organic peroxide is inherently solid at ambient temperatures. In addition, solids can be encapsulated by an air suspension technique (Wurster process) in which the wall material, being preformed condensed or polymerised material of the suitable types hitherto herein suggested for in-situ production is sprayed onto particles of the core organic peroxide of appropriate particle size in an air-fluidised bed.

By virtue of the physical separation of the peroxide initiator and the accelerator from each other by microencapsulation of the accelerator or both of them, it is possible to make and store stably resins compositions that contain both components of the curing system, which can subsequently be preheated and cured at the time of choosing of the resin curer. The constraint is thereby removed that the resin composition be formulated shortly before its use.

The amounts of initiator and accelerator to incorporate in the resin are selected at the discretion of the curer from within the range of effective amounts for each, that is to say the amounts that will effect the desired degree of curing. The amounts selected will normally take into account the inherent activity of the organic peroxide at the curing temperature and the ratio of activator to peroxide used. In practice the amounts of organic peroxide and accelerator introduced into the resin are each often chosen in the range of 0.5 to 2.0% w/w, and of course in determining the weight of microcapsules to add to achieve that figure, allowance for the wall material is needed too.

The resins are cured by heating them to the desired temperature and moulded by being subjected to pressure in the mould. Such pressure is typically at least 50 kg/cm$^2$ and often in the range of 70 to 110 kg/cm$^2$. Application of such pressure can encourage the rupturing of the microcapsules, especially when the walls are softened by being preheated to an elevated temperature.

It will be recognised that the instant invention represents a modification to existing processes for curing bulk or sheet moulding compound by the incorporation of accelerator and initiator in such a manner that they avoid premature curing. Accordingly, it is possible to employ the existing processes for curing such compounds and in particular such conditions as temperature to which the resin is preheated, temperature to which the resin is raised in the mould for curing, choice of peroxide initiator and pressure for the moulding operation with the expectation that residence time of the resin in the mould can be reduced, for example by a significant fraction. This fraction can vary from application to application and of course depends also on the amount of accelerator used, but reductions of up to or even in some cases of over 50% of the time are possible, assuming the same amount of the same initiator with addition of microencapsulated accelerator.

In some other methods of operation, when a comparatively low curing temperature is employed relative to the boiling point of the monomer, eg similar to or below that boiling point, the resin mixture containing the initiator and accelerator is preheated externally to a temperature of only a few degrees (Celcius) below the mould curing temperature, for example from 10 to 25°C below, and of course this can be carried out as a bulk, stirred operation instead of relying upon heat transfer by conduction into the body of the resin as is the case for heating in a mould. This provides the twin benefit of minimising the heating time needed in the mould and optimising the temperature profile from surface to centre of the resin in the mould, thereby maximising the extent to which the resin is cured evenly throughout the mould. Such a method of operation derives from the encapsulation of the accelerator.

In some other suitable methods of taking the benefit of the instant invention, the advantage of including the accelerator is taken by reducing the curing temperature of the resin by for example 10% to 30% of the extent of elevation of the curing temperature above ambient. Thus, by way of demonstration, if the non-accelerated process preheated to about 40 to 50°C and cured at about 100 to 120°C, then the advantage of the invention can be taken by curing at about 70 to 100°C and preheating to the extent previously described herein.

In yet further suitable ways of taking the advantages proffered by the instant invention, the fact that release of the accelerator into contact with the initiator substantially increases the rate of cure at any desired temperature means that it is possible to substitute a less active initiator for some or part of a more active initiator, such as for example a peroxydicarbonate for a perester or perketal. Thereby, without impairing the rate of cure compared with the unaccelerated system, one can minimise decomposition losses of initiator prior to the release of the peroxide into chemical contact with the polyester in the resin, because the self-initiated decomposition of organic peroxides is independent of whether or not the peroxide is encapsulated whereas it does vary inversely to the activity of the initiator.

It will be understood that herein it remains advantageous to select the particular combinations of organic peroxide type and accelerator type that have hitherto been identified as being beneficial. Thus by the use of particularly active combinations of organic peroxide and accelerator, press moulding at only moderately or scarcely elevated temperatures can be contemplated, the capsule walls being pressure-ruptured.

The moulding compositions for use in the instant invention can be simply unsaturated polyester resins or alternatively, the resins may contain fillers, additives and reinforcing fibres to the extent that the same is known in the art. Such fibres include glass fibres and fillers include graded, crushed, granulated or powdered minerals, and additives can include uv absorbers, antioxidants, flame retarders, mould release agents and the like. The proportion of filler and other additives can be and for many purposes is the major proportion of such compositions, the maximum amount depending upon the method of moulding to be used. Thus, the polyester resin in dough mouding compositions normally comprises at least 15% w/w thereof, and in sheet moulding compositions is normally at least 30% w/w thereof. The proportion of organic peroxide to incorporate in the compositions is typically at least 0.2% and up to 5.0% w/w (calculated as active material) of the unsaturated polyester resin, and in many instances is from 0.5 to 2.0% w/w on that same basis. The proportion of accelerator, expressed in terms of active material is often selected in the range of 0.001 to 0.05% w/w, and particularly 0.001 to 0.01% w/w, based on the unsaturated polyester resin. Since the accelerator as used often contains a very low proportion of active component, typically around 1%, the weight of accelerator-containing microcapsules employed is of a similar order of magnitude to the organic peroxide, ie from 0.1 to 5% w/w of the resin. The filler materials and other additives constitute the balance. As foreshadowed above, the actual amounts of such components depends upon the intendeduse of the composition. The amounts of the components are ususaly selected in the ranges % w/w of the composition:-

Filler - from 0 to 80
Mould release agent - from 0 to 5
Surface smoothing agent - from 0 to 10
Thickener - from 0 to 3

The products obtained by curing the polyester materials in accordance with the instant invention are employed in a wide range of industries and for a variety of purposes. These include the parts for the automotive industry, parts for appliances, manufacture of containers and building materials manufacturing.

Having described the invention in general terms, the manufacture and use of an encapsulated accelerator is described hereinafter in greater detail by way of example only.

Example 1

A pre-polymer solution was obtained by dissolving urea (100g) in an aqueous formaldehyde solution (265g, 37% w/w) and the solution was adjusted to pH8 with triethanolamine. The solution was heated to and maintained at 70°C for 1 hour in a vessel equipped with a refux condenser, thereby forming the prepolymer. The solution was then diluted by the addition of water (300g) and its pH readjusted to pH8 with triethanolamine.

An alcohol ethoxylate surfactant ($C_{13}$ to $C_{15}$ alcohol and av. 7EO units, trade mark SYNPERONIC A7, 7g) was dissolved in 300g of the pre-polymer solution and heated to 50°C. A solution of cobalt naphthenate (25g, about 8% w/w solution as Co in o-xylene) was mixed with additional o-xylene (25g) and then introduced under stirring at 1500 rpm approx. into the prepolymer solution, whereupon it formed a dispersion of small drops. The aqueous solution was then acidified to pH 3.1 and stirred at 50°C for 1 hour and then the solid encapsulated droplets were separated off and dried. Analysis of the solid material confirmed that it comprised small spheres, mainly in the diamater range of 1 to 5 microns, the structure of which was an outer wall retaining a cobalt solution within.

Example 2

In this Example, the process of Example 1 was followed, but at a scale one third as large, employing copper naphthenate instead of cobalt naphthenate, a mixed xylene (mainly m-xylene) instead of o-xylene and an ethoxylated sorbitan stearate, available under their Trade Mark "TWEEN" (Tween 80) instead of the alcohol ethoxylate surfactant. The resultant solid spheres were separated off, and on analysis found to contain copper.

Example 3

In this Example, the process of Example 2 was followed, but employing manganese octanoate, as a 16% w/w solution , diluted to 8% w/w, in mixed xylene as the source of transition metal. The resultant spheres on analysis were found to contain manganese

Example 4

In this Example, the process of Example 2 was followed, but employing vanadium naphthenate as the source of transition metal. The resultant spheres on analysis were found to contain vanadium.

Example 5

In this Example, an interfacial polymerisation technique was employed to obtain encapsulated product. An aqueous surfactant-containing solution was prepared by dissolving sodium carbonate (4.5g) and surfactant (TWEEN 80, 1.0g) in demineralised water (100mls) and its pH adjusted to pH10.5 by the addition of sodium bicarbonate. The liquid was thoroughly stirred throughout the process. A solution of copper naphthenate (5g) in mixed xylene (5g) and sebacoyl chloride (1.3g)was introduced, the resultant suspension was cooled to 10°C, and maintained at that temperature during the subsequent introduction of an aqueous solution containing sodium carbonate (2.25g) and hexan-1,6-diamine in demineralised water (50 mls) the pH of which had been adjusted to pH 10.5 with sodium bicarbonate. The reaction was permitted to continue with stirring at 10 °C for a further hour. The phases were permitted to separate, and the aqueous phase discarded. The organic phase was diluted with acetone (200 mls) resulting in a green solid which was filtered off. Analysis of the solid showed that it comprised microcapsules containing copper, and also that a higher proportion of the copper was recovered in the encapsulated product using this technique than the technique employed in Example 2.

Demonstration of Curing of Resin Pastes. Samples of resin pastes were made by blending together the following components in the order given, all parts being by weight:-
polyester resin, 100 parts (supplied by Bayer under their trademark Leguval W 20);
the liquid or encapsulated organic peroxide and/or liquid or encapsulated accelerator, in the amounts listed in Table 1 below, magnesium oxide thickener, 2 parts;
zinc stearate as mould release agent, 4 parts;
powdered polyethylene surface smoothing agent, 10 parts (from K P Fedderson GmbH); and
calcium carbonate filler, 100 parts (supplied by Omya GmbH under their trademark Omya BLR-3).
The abbreviations used for components in Table 1 are as follows:-
NOP    Non-encapsulated organic peroxide, t-butyl-per-2-ethylhexanoate
EOP    Encapsulated organic peroxide, 48% w/w of t-butyl-per-2-ethyl-hexanoate produced by a method similar to that employed for the accelerator in Example 5, except for the use of an ethoxylated surfactant, available under the Trade Mark Synperonic A7.
EA    Encapsulated accelerator contained 1% w/w cobalt present as cobalt naphthenate and was produced by the process according to Example 1.
NE    Non-encapsulated accelerator was a solution of cobalt octoate, 1% Co, in dimethylphthalate.

## Table 1

| Component | Parts by weight in the Composition No: | | | | | | | | |
|---|---|---|---|---|---|---|---|---|---|
| | S1 | S2 | S3 | S4 | S5 | S6 | S7 | S8 | S9 |
| NOP | 1.0 | 1.0 | 1.0 | 1.0 | 1.0 | – | – | – | – |
| EOP | – | – | – | – | – | 2.0 | 2.0 | 2.0 | 2.0 |
| NA | – | – | – | – | 0.2 | – | – | – | – |
| EA | – | 0.2 | 0.5 | 1.0 | – | – | 0.2 | 0.5 | 1.0 |

The compositions were stored in sealed tins to prevent evaporation of monomer. The residual effectiveness of the catalysts and/or accelerators in the compositions were tested using a press test and a spiral flow test carried out on pastes that had been stored for the period of time specified.

Tablet Press Test In the press test, resin at ambient temperature (3.2g), was charged into a block that had been preheated to and maintained subsequently at the temperature of 100 or 120°C as stated at the head of the relevant Tables. This is the start point for timings. A pressure of 20 Kg/cm² was applied. The temperature of the mixture was monitored via a thermocouple probe in the middle of the tablet. The initial expansion of the resin resulting from the resin heating up and its subsequent contraction as it was cured was monitored using a height probe attached to the piston. The start of cure is defined as the time when the resin ceases to expand. The outputs from the temperature and piston height monitors were fed to a twin trace recorder/plotter, from which traces the various times and temperatures were read.

Spiral Flow Test In this test, the apparatus comprised a two-part solid block, the lower part of which has a spiral channel on its upper surface that extends outwardly 90 cms from a central cylindrical hole in which a thermally insulated temperature thermocouple is positioned. The upper part of the block is provided with a cylindrical aperture coaxial with and of the same radius as that in the lower part of the block. Both parts of the block have oil-filled cicumferential heating rings that are thermostatically controlled, the actual temperature being as specified in the Tables of results. A piston slides in the cylindrical aperture in the block under applied pressure. The output from the thermocouple and the piston height detector are fed to twin trace recorder. Resin mixture, 18.0 g, at ambient temperature is charged into the cylindrical aperture in the block, and pressure is applied to the charge by the piston, normally at 25 Kg/cm². This represents the start point for timings. The resin flowed into the spiral and the extent to which this occurred is seen from the change in height of the piston, the % filling of the spiral having been previously calibrated against height change. The start of cure in this test is defined as the point at which the resin ceases to flow, i.e. when the maximum attainable proportion of the spiral is filled with resin. As in he tablet test, start of cure time, the temperature at which it occurs, peak temperature and time at which it occurs are read directly from the recorder traces.
The results of the tests are summarised in Tables 2 to 10 using the following abbreviations which have the meanings:-
tR (min)   Time from start of heating to beginning of cure
TR (°C)   Temperature of SMC mass when cure begins
tmax (min)   Time from start to maximum temperature
Tmax (°)   Maximum Temperature attained by SMC mass
Flow Time (sec)   Time for SMC paste to flow
Flow length %   Proportion of spiral in which SMC flows, 90cm = 100%.
SMC   Sheet moulding composition

Table 2

Activity measurement in the tabletting equipment at 100°C, after storage for 1 week.

| Composition | S1 | S2 | S3 | S4 | S5 | S6 | S7 | S8 | S9 |
|---|---|---|---|---|---|---|---|---|---|
| tR (min) | 2.4 | 2.5 | 2.4 | 2.4 | 2.5 | 1.8 | 1.8 | 1.8 | 1.8 |
| TR (°C) | 95 | 95 | 95 | 95 | 95 | 90 | 90 | 90 | 90 |
| tmax (min) | 3.6 | 3.7 | 3.7 | 3.7 | 3.7 | 2.7 | 2.8 | 2.9 | 2.8 |
| Tmax (°) | 165 | 159 | 160 | 157 | 170 | 171 | 165 | 169 | 170 |

Table 3

Activity measurement in the tabletting equipment at 100°C, after storage for 4 weeks.

| Composition | S1 | S2 | S3 | S4 | S5 | S6 | S7 | S8 | S9 |
|---|---|---|---|---|---|---|---|---|---|
| tR (min) | 2.9 | 2.8 | 2.8 | 2.9 | 3.2 | 2.0 | 2.1 | 2.1 | 2.2 |
| TR (°C) | 95 | 95 | 95 | 95 | 96 | 90 | 92 | 91 | 91 |
| tmax (min) | 4.2 | 4.2 | 4.2 | 4.2 | 4.9 | 3.2 | 3.2 | 3.2 | 3.2 |
| Tmax (°) | 153 | 154 | 155 | 153 | 163 | 166 | 164 | 165 | 168 |

Table 4

Activity measurement in the tabletting equipment at 120°C, after storage for 1 week.

| Composition | S1 | S2 | S3 | S4 | S5 | S6 | S7 | S8 | S9 |
|---|---|---|---|---|---|---|---|---|---|
| tR (min) | 1.1 | 1.1 | 1.1 | 1.1 | 1.1 | 0.9 | 0.9 | 0.9 | 0.9 |
| TR (°C) | 92 | 92 | 92 | 92 | 92 | 85 | 85 | 85 | 85 |
| tmax (min) | 1.8 | 1.8 | 1.8 | 1.8 | 1.7 | 1.5 | 1.5 | 1.5 | 1.5 |
| Tmax (°) | 178 | 180 | 179 | 178 | 181 | 176 | 176 | 176 | 176 |

Table 5

Activity measurement in the tabletting equipment at 120°C, after 4 weeks storage.

| Composition | S1 | S2 | S3 | S4 | S5 | S6 | S7 | S8 | S9 |
|---|---|---|---|---|---|---|---|---|---|
| tR (min) | 1.1 | 1.2 | 1.2 | 1.2 | 1.3 | 1.0 | 1.1 | 1.0 | 1.0 |
| TR (°C) | 92 | 94 | 93 | 93 | 94 | 87 | 88 | 88 | 88 |
| tmax (min) | 1.9 | 1.9 | 1.9 | 2.0 | 2.0 | 1.6 | 1.6 | 1.6 | 1.6 |
| Tmax (°) | 177 | 177 | 177 | 177 | 180 | 174 | 174 | 174 | 173 |

### Table 6

Activity measurement in the tabletting equipment at 100°C, after 20 weeks storage.

| Composition | S1 | S2 | S3 | S4 | S5 | S6 | S7 | S8 | S9 |
|---|---|---|---|---|---|---|---|---|---|
| tR (min) | 3.6 | 3.5 | 3.3 | 3.3 | 3.6 | 2.5 | 2.4 | 2.4 | 2.3 |
| TR (°C) | 98 | 97 | 97 | 97 | 97 | 94 | 94 | 94 | 94 |
| tmax (min) | 5.2 | 5.2 | 5.0 | 5.0 | 5.8 | 3.5 | 3.5 | 3.5 | 3.4 |
| Tmax (°) | 123 | 130 | 135 | 130 | 140 | 152 | 150 | 137 | 140 |

### Table 7

Activity measurement in the tabletting equipment at 120°C, after 20 weeks storage.

| Composition | S1 | S2 | S3 | S4 | S5 | S6 | S7 | S8 | S9 |
|---|---|---|---|---|---|---|---|---|---|
| tR (min) | 1.3 | 1.3 | 1.2 | 1.2 | 1.4 | 1.0 | 1.0 | 1.0 | 1.0 |
| TR (°C) | 98 | 97 | 98 | 98 | 98 | 95 | 94 | 93 | 93 |
| tmax (min) | 2.0 | 2.0 | 2.0 | 2.0 | 2.1 | 1.7 | 1.7 | 1.7 | 1.7 |
| Tmax (°) | 158 | 168 | 169 | 166 | 175 | 168 | 168 | 163 | 169 |

### Table 8

Flow measurement in the spiral tool at 120°C after 1 week.

| Composition | S1 | S2 | S3 | S4 | S5 | S6 | S7 | S8 | S9 |
|---|---|---|---|---|---|---|---|---|---|
| tmax (min) | 2.1 | 2.1 | 2.1 | 2.0 | 2.2 | 1.8 | 1.9 | 1.8 | 1.7 |
| Tmax (°) | 159 | 158 | 157 | 158 | 160 | 156 | 157 | 156 | 155 |
| Flow Time (sec) | 40 | 35 | 35 | 35 | 50 | 35 | 35 | 35 | 35 |
| Flow length % | 100 | 90 | 75 | 60 | 85 | 100 | 100 | 80 | 70 |

### Table 9

Flow measurement in the spiral tool at 120°C after 4 weeks.

| Composition | S1 | S2 | S3 | S4 | S5 | S6 | S7 | S8 | S9 |
|---|---|---|---|---|---|---|---|---|---|
| tmax (min) | 2.2 | 2.4 | 2.2 | 2.2 | 2.4 | 2.0 | 2.0 | 1.9 | 1.8 |
| Tmax (°) | 159 | 158 | 158 | 158 | 160 | 157 | 156 | 154 | 154 |
| Flow Time (sec) | 30 | 30 | 30 | 25 | 25 | 25 | 25 | 25 | 20 |
| Flow length % | 50 | 45 | 40 | 40 | 20 | 75 | 65 | 60 | 45 |

## Table 10

Flow measurement in the spiral tool at 120°C after 20 weeks.

| Composition | S1 | S2 | S3 | S4 | S5 | S6 | S7 | S8 | S9 |
|---|---|---|---|---|---|---|---|---|---|
| tmax (min) | 2.4 | 2.4 | 2.3 | 2.3 | 2.5 | 1.8 | 1.8 | 1.8 | 1.8 |
| Tmax (°) | 145 | 147 | 150 | 148 | 156 | 148 | 151 | 146 | 150 |
| Flow Time (sec) | 25 | 30 | 25 | 25 | 45 | 20 | 20 | 20 | 20 |
| Flow length % | 15 | 12 | 8 | 5 | 0 | 30 | 25 | 25 | 20 |

From Tables 2 to 10, it can be seen that the compositions in which the accelerator was encapsulated showed greater storage stability than when it was not encapsulated, and further that particularly advantageous results were obtained when the organic peroxide was encapsulated as well as the accelerator.

**Claims**

1. An accelerator of the type suitable for accelerating the curing of an unsaturated polyester resin characterised in that the accelerator is in the form of microcapsules, in which a wall or polymeric matrix surrounds or incorporates the accelerator, which wall or matrix material is substantially insoluble in the unsaturated polyester resin at ambient temperatures, thereby separating the accelerator from the resin and in consequence permitting extended storage of a mixture of resin and accelerator, and which wall or matrix material is capable of releasing the accelerator at elevated temperature or pressure.

2. An accelerator according to claim 1 characterised in that the accelerator is a salt of a transition metal.

3. An acclelerator according to claim 2 characterised in that the transition metal is selected from copper, manganese, vanadium and cobalt.

4. An accelerator according to claim 2 or 3 characterised in that the salt is a carboxylic acid salt.

5. An accelerator according to any preceding claim characterised in that the microcapsules have a diameter of 1 to 10 microns.

6. A process for producing a micro-encapsulated accelerator characterised in that the accelerator is employed in the form of a liquid hydrophobic phase which is dispersed by shearing into small droplets in an aqueous phase, the oil and aqueous phases containing monomer and or cross-linkable pre-condensate and if necessary a polymerisation or cross-linking catalyst and the oil phase is maintained dispersed whilst a solid polymer or cross-linked polymer is formed or deposited at the interface between the two phases, thereby forming a coherent wall around the oil phase droplet or matrix within which the oil phase is incorporated.

7. A process according to claim 6 characterised in that the accelerator is dissolved in a hydrocarbon liquid that has a boiling point of at least 120°C.

8. A process according to claim 6 or 7 characterised in that the aqueous phase is acidic and contains a urea/formaldehyde precondensate and further characterised in that the urea/formaldehyde is hardened by maintaining the dispersed oil in water emulsion at a mildly elevated temperature.

9. A process according to claim 6 or 7 characterised in that the oil phase contains an ethylenically unsaturated monomer and the aqueous phase contains a polymerisation catalyst which enables the polymer to be formed at the interface.

10. A process according to claim 9 characterised in that the ethylenically unsaturated monomer is styrene, optionally containing a small proportion of divinylbenzene and the catalyst is a water soluble persulphate.

11. A process according to claim 6 or 7 characterised in that the oil phase contains an oil-soluble monomer and the aqueous phase contains a water-soluble monomer that is reactive with the oil-soluble monomer, whereby a polymer is formed at the interface between the two phases.

12. A process according to claim 11 characterised in that the oil soluble monomer comprises a monomer terminating in two carboxylic acid chloride groups and the water soluble monomer comprises a monomer terminating in two amine groups, whereby reaction between said monomers produces a polyamide.

13. A process according to claim 12 characterised in that the diamine monomer is an aliphatic linear alpha-omega diamine containing from 5 to 10 carbon atoms.

14. A process according to claim 11 or 12 characterised in that the carboxylic acid chloride monomer is terephthaloyl chloride.

15. An unsaturated polyester resin containing a microencapsulated accelerator as claimed in any one of claims 1 to 5 or containing the product of any one of claims 6 to 14.

16. A resin according to claim 15 characterised in that it also contains a microencapsulated organic peroxide.

17. A process for curing an unsaturated polyester resin in which the resin is mixed with an organic peroxide initiator and with an accelerator, the mixture is moulded to a desired shape and the temperature of the mixture is raised to and maintained at a temperature at which the resin is cured characterised in that the accelerator is introduced in the form of microcapsules, the wall or matrix of which is capable of releasing the accelerator at cure temperature and/or cure pressure, thereby reducing the extent of premature curing at below the desired cure temperature or pressure.

18. A process according to claim 17 in which the organic peroxide initiator is also present in the form of microcapsules.

19. Microencapsulated accelerator for accelerating the curing of an unsaturated polyester resin, or a process for its preparation, or an unsaturated polyester resin composition containing microencapsulated accelerator or a process for curing an unsaturated polyester resin composition employing a microencapsulated accelerator employing any novel feature or novel combination of features described in the text or claims herein.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | PATENT ABSTRACTS OF JAPAN, vol. 6, no. 73 (C-101)[951], 8th May 1982; & JP-A-57 12 017 (MITSUBISHI YUKA K.K.) 21-01-1982 * Abstract * | 1-19 | C 08 K 9/10 C 08 L 67/06 C 08 J 3/24 |
| X | NL-A-7 501 929 (ARO PARTICIPATION LTD) * Claims; example; page 2, lines 21-26 * | 17-19 | |
| X | GB-A- 991 048 (DRAYTON RESEARCH LTD) * Claims; page 1, lines 73-78 * | 1-5,17-19 | |
| A | US-A-4 154 774 (R. HINTERWALDNER) * Claims; examples; column 6, lines 4-30 * | 1 | |

TECHNICAL FIELDS
SEARCHED (Int. Cl.4)

C 08 K
C 08 L
B 01 J
C 08 J

The present search report has been drawn up for all claims

| Place of search | Date of completion of the search | Examiner |
|---|---|---|
| THE HAGUE | 14-07-1988 | DE LOS ARCOS Y VELAZQUEZ |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)